# NOUVEAU FASCICULE DE BREVET EUROPEEN

(11) **EP 1 081 202 B2**
(45) Date de publication et mention de la décision concernant l'opposition: **12.04.2017**
(45) Mention de la délivrance du brevet: 10.03.2004
(21) Numéro de dépôt: 00402422.0
(22) Date de dépôt: 01.09.2000
(51) Int. Cl.: C09J 7/04, D04H 1/48, D04H 1/60

(54) **Ruban adhésif sur support non tissé déchirable à la main**
Klebeband mit handreissbarem Vliesträger
Adhesive tape with hand-tearable non-woven support

(30) Priorité: 02.09.1999 FR 9911016
(43) Date de publication de la demande: 07.03.2001
(73) Titulaire: Groupe Scapa France, 26000 Valence (FR)
(72) Inventeur: Goux, Alain, 01120 Nievroz (FR); Barnet, Rémi, 73000 Chambery (FR)
(74) Mandataire: de Kernier, Gabriel

(56) Documents cités:
- EP-A- 0 668 336
- EP-A2- 0 716 136
- EP-A2- 0 995 782
- EP-A2- 0 995 783
- WO-A1-01/09263
- DE-A- 19 523 494
- DE-A1- 1 957 410
- DE-U- 29 819 014
- FR-A1- 2 798 134
- US-A- 2 487 060
- US-A- 4 302 500
- US-A- 5 368 923
- US-A- 5 631 073
- Rubon adhesif Tesa-Exemplaire d'un cataloge
- tesaband 51608-PET-Vlies für manuell gefertigte Fahrzeug-Innenraum-Kabelsätze
- DONATAS SATAS ET AL: 'Handbook of pressure sensitive adhesives technology', 1989, LIBRARY OF CONGRESS CATALOG pages 812 - 767
- 'Vliesstoffe', 1982, GEORG THIEME VERLAG pages 48 - 73
- BÖTTCHER, P. ET AL: 'Vliesstoffe', vol. 1, VEB FACHBUCHVERLAG, LEIPZIG

## Description

L'invention concerne les rubans adhésifs d'une manière générale, et notamment ceux utilisés pour l'enrubannage de faisceaux de câbles, plus particulièrement dans la construction automobile.

On connaît depuis longtemps des rubans adhésifs dits "anti-bruit" possédant un support de feutre aiguilleté d'une épaisseur généralement supérieure à 1 mm et d'une masse surfacique généralement supérieure à 120 g/m². Le caractère anti-bruit est important dans le secteur automobile car il réduit les bruits provoqués par le frottement des faisceaux de câbles contre la carrosserie et les autres éléments du véhicule. Pour éviter une trop grande pénétration de l'adhésif dans ce type de support, l'adhésif est habituellement appliqué par transfert, c'est-à-dire qu'il est d'abord enduit sur un intercalaire constitué par une bande anti-adhérente de même largeur que le support, après quoi le support est contre-collé sur l'adhésif par lamination. L'intercalaire évite également le peluchage du support lors du déroulement du ruban. Mais il doit être éliminé lors de l'utilisation du produit. De plus, ces rubans adhésifs ne sont pas déchirables à la main et nécessitent donc l'usage d'un outil coupant.

EP-A-0 668 336, EP-A-0 716 136, EP-A-0 716 137 et WO-A-9617027 décrivent des rubans adhésifs comportant un support de fibres textiles non tissées et cousues, en particulier du type dit "Malivlies" ou du type dit "Maliwatt", destinés notamment à l'enrubannage de câbles électriques dans l'industrie automobile. Les qualités anti-bruit de ces rubans adhésifs sont moins bonnes que celles des rubans à support de feutre mentionnés précédemment, comme le montre le tableau 1 qui donne le niveau sonore (pondération A) déterminé pour différents rubans adhésif selon une méthode dérivée de la méthode BMW (bruit de fond 30 dBA, niveau acoustique sans ruban adhésif 80 dBA).

JP-A-2 163 183 décrit un ruban adhésif anti-bruit déchirable à la main pour l'enrubannage de faisceaux de câbles dans l'industrie automobile, comprenant un support textile et un adhésif sensible à la pression. La structure exacte du support n'est pas décrite.

On connaît également des rubans adhésifs à support tricoté gratté. Ces produits sont coûteux à réaliser, et la pénétration de l'adhésif dans le support est importante. De plus ils ne sont pas déchirables à la main.

Le but de l'invention est de réaliser un ruban adhésif peu coûteux, facile à utiliser et présentant de bonnes propriétés de réduction du bruit.

Un autre but est de fournir un tel ruban adhésif déchirable à la main.

L'invention vise notamment un ruban adhésif comprenant un support fibreux non tissé sous forme d'un aiguilleté et une couche d'adhésif recouvrant une face du support.

Selon l'invention, ce ruban adhésif est enroulé avec contact direct entre l'adhésif et le support d'une spire voisine, ledit support a une épaisseur comprise entre 0,3 et 1 mm et une masse surfacique de fibres comprise entre 70 et 120 g/m², et les fibres sont noyées dans l'adhésif sur une partie de l'épaisseur du support comprise entre 10 µm et 0,5 mm.

Des caractéristiques optionnelles du ruban adhésif selon l'invention, complémentaires ou alternatives, sont énoncées ci-après:
- L'épaisseur du support est comprise entre 0,4 et 0,7 mm.
- La masse surfacique de fibres du support est comprise entre 80 et 110 g/m².
- Il présente un effort de déchirement transversal inférieur à 15 N selon la méthode AFERA 4007.
- Les fibres du support sont formées au moins pour l'essentiel de fibres de polyester et/ou de viscose.
- Le rapport en masse de la viscose au polyester dans lesdites fibres est compris entre 20:80 et 50:50 et de préférence entre 40:60 et 50:50.
- Le support contient une proportion au plus égale à 20 % en masse de fibres plus facilement fusibles que les fibres de polyester et/ou de viscose, propres à se lier entre elles par traitement thermique pour renforcer la cohésion du support.
- La proportion desdites fibres plus facilement fusibles est comprise entre 5 et 15 % en masse.
- Ledit adhésif est sensible à la pression.
- La face du support opposée à l'adhésif est calandrée.
- La face du support opposée à l'adhésif est revêtue d'un vernis anti-adhérent.

L'invention a également pour objet un procédé pour réaliser un ruban adhésif tel que défini ci-dessus, dans lequel l'adhésif est appliqué sur le support à l'état fluide et est ensuite amené à l'état solide par un traitement approprié, par exemple par refroidissement, séchage ou irradiation.

L'invention prévoit encore l'utilisation du ruban adhésif défini plus haut pour l'enrubannage de faisceaux de câbles, notamment dans la construction automobile.

La feutrine aiguilletée formant le support du ruban adhésif selon l'invention peut être obtenu par toute technique connue dans l'industrie textile et notamment au moyen de cardeuses. Bien qu'on puisse mettre en oeuvre n'importe quelles fibres textiles communément utilisées dans l'industrie des aiguilletés, les fibres de polyester et/ou de viscose sont préférées, notamment pour l'utilisation dans l'industrie automobile. Une proportion judicieuse de ces deux types de fibres permet de concilier une bonne tenue à la température, favorisée par le polyester, et une bonne déchirabilité, favorisée par la viscose. Une traction franche facilite le déchirement à la main.

Avantageusement, le support a une résistance à la rupture en traction supérieure à 1,5 daN/cm, un module à 20 % d'allongement supérieur à 0,5 N/cm et un allongement à la rupture compris entre 50 % et 100 %. Un tel module limite le retrait pendant les opérations d'enduction et lors du déroulement du ruban.

L'incorporation de fibres plus facilement fusibles, et leur liaison mutuelle par traitement thermique, notamment lors du calandrage du support, diminuent le peluchage lors du déroulement du ruban et l'effort exigé par celui-ci. Une proportion de ces fibres ne dépassant pas 20 % en masse, et en particulier comprise entre 5 et 15 %, préserve la flexibilité du support. Leur point de fusion est de préférence compris entre 50 et 170° C. Elles peuvent être de nature vinylique ou à base d'un copolymère dérivé du polyester appelé communément "copolyester".

Un vernis anti-adhérent, appliqué à l'état fluide, comme connu en soi, sur la face du support opposée à l'adhésif, permet également un déroulement facile sans peluchage. Cet effet est confirmé par le tableau 2, qui donne l'effort de déroulement en Newton par centimètre de largeur pour deux rubans adhésifs comportant et ne comportant pas un tel vernis et semblables par ailleurs.

Le calandrage précité est de préférence effectué de manière à lisser la face du support opposée à l'adhésif, avec ou sans fibres facilement fusibles, par exemple en portant à une température appropriée le cylindre qui s'appuie sur cette face. Il permet d'obtenir une meilleure cohésion des fibres entre elles, ce qui limite le peluchage.

La pénétration partielle de l'adhésif dans le support est obtenue grâce à l'enduction directe, l'adhésif étant appliqué directement sur le support, à l'état fluide, par exemple sous forme d'une solution, ou d'une dispersion aqueuse, ou à l'état fondu, ou sous forme d'un précurseur qui est ensuite réticulé par irradiation ou par traitement thermique. L'adhésif peut être appliqué par toute technique connue, notamment une technique utilisant des cylindres et de préférence la technique de transfert cylindre sur cylindre. La pénétration partielle de l'adhésif rigidifie le support et réduit l'effort de déchirement transversal du ruban par rapport à celui du support non enduit. Ceci apparaît dans le tableau 3, qui indique l'effort de déchirement transversal, d'une part pour un ruban adhésif selon l'invention dont le support est composé de 55 % de fibres de polyester et de 45 % de viscose en masse, présentant une masse surfacique de 90 g/m², et d'autre part pour ce même support sans adhésif. Il s'agit de l'effort de traction, déterminé selon la méthode AFERA 4007, qu'il faut exercer sur le ruban dans la direction perpendiculaire au plan de celui-ci, de part et d'autre d'une entaille ménagée transversalement à partir d'un bord, pour le déchirer à partir de cette entaille vers le bord opposé.

L'effort de déchirement transversal de ce même support est également donné dans le tableau 4, par comparaison avec un support analogue en polyester pur, ce qui confirme l'influence bénéfique de la viscose sur la déchirabilité.

L'application de l'adhésif à l'état fluide se traduit en outre par de multiples irrégularités de la surface libre de la couche d'adhésif, en correspondance des irrégularités de la surface du support, qui diminuent la surface de contact entre l'adhésif et la spire voisine du support dans le ruban enroulé, facilitant ainsi le déroulement et limitant le peluchage qui accompagne celui-ci. Il est avantageux que l'effort de déroulement ne dépasse pas 3,5 N/cm et de préférence 3 N/cm.

Le degré de pénétration de l'adhésif dans le support peut être réglé en jouant sur la viscosité de l'adhésif et sur la présence ou non d'une poudre appliquée de manière connue sur la face du support recevant celui-ci. Une telle poudre, par exemple à base de polyester ou de préférence de polyéthylène, peut être appliquée en une quantité pouvant atteindre 70 g/m², et de préférence comprise entre 10 et 30 g/m².

Une telle poudre peut également être appliquée, en supplément ou en remplacement du vernis anti-adhérent, sur la face du support opposée à la couche d'adhésif, de manière à réduire l'effort de déroulement.

La viscosité de l'adhésif a également une influence sur l'adhésivité du ruban adhésif. Le tableau 5 donne les valeurs d'adhésivité sur endos déterminées par la méthode AFERA et par la méthode RENAULT sur deux rubans adhésifs ayant le même support et un adhésif de même composition finale, le poids d'adhésif et sa viscosité à l'application étant différentes. On voit que l'élévation de la viscosité permet d'augmenter l'adhésivité, malgré une diminution du poids d'adhésif. Le comportement en déroulement n'est pas affecté.

Le tableau 1 montre qu'un ruban adhésif selon l'invention (feutrine 90 g) fournit, malgré une masse surfacique de fibres relativement faible, un effet antibruit supérieur à celui de rubans adhésifs connus à supports des types Malivlies et Maliwatt.

### Exemple 1

On prépare une feutrine aiguilletée d'une masse surfacique de 90 g/m², composée de 50 % de fibres de polyester, 45 % de fibres de viscose et 5 % de fibres de copolyester d'un point de fusion inférieur à 170°C, calandrée à 190°C et comportant 20 g/m² de poudre de polyéthylène sur la face opposée à la face calandrée. On applique ensuite, par-dessus la poudre de polyéthylène, une solution à base de caoutchouc naturel préréticulé dans le toluène, d'une viscosité de 100 000 centipoises, pour une quantité finale d'adhésif de 64 g/m², et sur la face calandrée un vernis anti-adhérent usuel. Le ruban adhésif obtenu a un effort de déroulement immédiat de 1,9 N/cm, une adhésivité sur endos AFERA de 8,4 N/cm et une résistance au déchirement transversal selon AFERA de 8,56 N.

### Exemple 2

On part d'une feutrine aiguilletée d'une masse surfacique de 102 g/m², de même composition que celle de l'exemple 1. Cette feutrine reçoit 40 g/m² de poudre de polyéthylène et est calandrée à 190° C sur sa face opposée à celle recouverte de poudre. Un vernis anti-adhérent et une couche d'adhésif sont ensuite appliqués de la même manière que dans l'exemple 1, la quantité finale d'adhésif étant de 65 g/m². Le ruban adhésif résultant a un effort de déroulement immédiat de 1 N/cm, une adhésivité sur endos selon AFERA de 4,4 N/cm et un effort de déchirement transversal de 7,86 N.

**Tableau 1**

| Ruban adhésif | Niveau acoustique (dBA) |
|---|---|
| Feutrine 150 g/m² + adhésif 50-80 g/m² | 56 |
| Feutrine 90 g/m² + adhésif 50-80 g/m² | 63,5 |
| Malivlies 90 g/m² + adhésif 50-80 g/m² | 65,5 |
| Maliwatt 130 g/m² + adhésif 120 g/m² | 67,3 |
| Maliwatt 130 g/m² + adhésif 200-250 g/m² | 65,7 |
| Maliwatt 90 g/m² + adhésif 50-80 g/m² | 71,8 |

**Tableau 2**

| Vernis anti-adhérent | Effort de déroulement (N/cm) |
|---|---|
| Absent | 4,5 |
| Présent | 1,2 |

**Tableau 3**

| Ruban | Effort de déchirement transversal (N) |
|---|---|
| Support sans adhésif | 15,2 |
| Support + adhésif | 8,6 |

**Tableau 4**

| Fibres du support | Effort de déchirement transversal (N) |
|---|---|
| 100 % polyester | 18,0 |
| 55 % polyester | 15,2 |
| 45 % viscose | |

**Tableau 5**

| | | |
|---|---|---|
| Poids d'adhésif (g/m²) | 55 | 64 |
| Viscosité (cps) | 103 000 | 52 000 |
| Adhésivité/endos AFERA (N/cm) | 17,4 | 12,2 |
| Adhésivité/endos RENAULT (N/cm) | 2,9 | 1,8 |
| Effort de déroulement (N/cm) | 1,3 | 1,2 |

## Revendications

1. Ruban adhésif comprenant un support fibreux non tissé sous forme d'un aiguilleté et une couche d'adhésif recouvrant une face du support, **caractérisé en ce qu'**il est enroulé avec contact direct entre l'adhésif et le support d'une spire voisine, que ledit support a une épaisseur comprise entre 0,3 et 1 mm et une masse surfacique de fibres comprise entre 70 et 120 g/m² et que les fibres sont noyées dans l'adhésif sur une partie de l'épaisseur du support comprise entre 10 µm et 0,5 mm.

2. Ruban adhésif selon la revendication 1, dans lequel l'épaisseur du support est comprise entre 0.4 et 0,7 mm.

3. Ruban adhésif selon l'une des revendications précédentes, dans lequel la masse surfacique de fibres du support est comprise entre 80 et 110 g/m².

4. Ruban adhésif selon l'une des revendications précédentes, présentant un effort de déchirement transversal inférieur à 15 N selon la méthode AFERA 4007.

5. Ruban adhésif selon l'une des revendications précédentes, dans lequel les fibres du support sont formées au moins pour l'essentiel de fibres de polyester et/ou de viscose.

6. Ruban adhésif selon la revendication 5, dans lequel le rapport en masse de la viscose au polyester dans lesdites fibres est compris entre 20:80 et 50:50 et de préférence entre 40:60 et 50:50.

7. Ruban adhésif selon l'une des revendications 5 et 6, dans lequel le support contient une proportion au plus égale à 20 % en masse de fibres plus facilement fusibles que les fibres de polyester et/ou de viscose, propres à se lier entre elles par traitement thermique pour renforcer la cohésion du support.

8. Ruban adhésif selon la revendication 7, dans lequel la proportion desdites fibres plus facilement fusibles est comprise entre 5 et 15 % en masse.

9. Ruban adhésif selon l'une des revendications précédentes, dans lequel ledit adhésif est sensible à la pression.

10. Ruban adhésif selon l'une des revendications précédentes, dans lequel la face du support opposée à l'adhésif est calandrée.

11. Ruban adhésif selon l'une des revendications précédentes, dans lequel la face du support opposée à l'adhésif est revêtue d'un vernis anti-adhérent.

12. Procédé pour réaliser un ruban adhésif selon l'une des revendications précédentes, dans lequel l'adhésif est appliqué sur le support à l'état fluide et est ensuite amené à l'état solide par un traitement approprié, par exemple par refroidissement, séchage ou irradiation.

13. Utilisation d'un ruban adhésif selon l'une des revendications 1 à 11 pour l'enrubannage de faisceaux de câbles, notamment dans la construction automobile.

## Patentansprüche

1. Klebeband, umfassend einen Träger aus Vliesfasern in genagelter Form und eine Klebstoffschicht, die eine Seite des Trägers bedeckt, **dadurch gekennzeichnet, dass** es in direktem Kontakt zwischen dem Klebstoff und dem Träger einer benachbarten Wickellage zusammenge-rollt ist, der genannte Träger eine Dicke von 0,3 bis 1 mm und eine Oberflächenmasse der Fasern von 70 bis 120 g/m² aufweist, und dass die Fasern im Klebstoff auf einem Teil der Dicke des Trägers von 10 µm bis 0,5 mm eingetaucht sind.

2. Klebeband gemäß Anspruch 1, worin die Dicke des Trägers 0,4 bis 0,7 mm beträgt.

3. Klebeband gemäß einem der vorhergehenden Ansprüche, worin die oberflächenmasse der Fasern 80 bis 110 g/m2 beträgt.

4. Klebeband gemäß einem der vorhergehenden Ansprüche, welches eine Kraft zum Zerreißen in Querrichtung von weniger als 15 N gemäß dem Verfahren AFERA 4007 aufweist.

5. Klebeband gemäß einem der vorhergehenden Ansprüche, worin die Fasern des Trägers zumindest im Wesentlichen aus Polyester- und/oder Viskose-Fasern gebildet sind.

6. Klebeband gemäß Anspruch 5, worin das Masseverhältnis der Viskose zum Polyester in den genannten Fasern 20:80 bis 50:50 und vorzugsweise 40:60 bis 50:50 beträgt.

7. Klebeband gemäß einem der Ansprüche 5 und 6, worin der Träger einen Mengenanteil von höchstens 20 Masse-% an Fasern enthält, die leichter schmelzbar als die Fasern aus Polyester und/oder Viskose sind und sich dazu eignen, untereinander durch Wärmebehandlung verbunden zu werden, um den Zusammenhalt des Trägers zu verstärken.

8. Klebeband gemäß Anspruch 7, worin der Mengenanteil der genannten leichter schmelzbaren Fasern 5 bis 15 Masse-% ausmacht.

9. Klebeband gemäß einem der vorhergehenden Ansprüche, worin der genannte Klebstoff druckempfindlich ist.

10. Klebeband gemäß einem der vorhergehenden Ansprüche, worin die dem Klebstoff gegenüberliegende Seite des Trägers kalandert ist.

11. Klebeband gemäß einem der vorhergehenden Ansprüche, worin die dem Klebstoff gegenüberliegende Seite des Trägers mit einem Anti-Haftlack überzogen ist.

12. Verfahren zur Herstellung eines Klebebandes gemäß einem der vorhergehenden Ansprüche, wobei der Klebstoff auf den Träger in fluidem Zustand aufgebracht und dann in den festen Zustand durch geeignete Behandlung, z.B. durch Kühlung, Trocknung oder Bestrahlung, überführt wird.

13. Verwendung eines Klebebands gemäß einem der Ansprüche 1 bis 11 zur Umhüllung von Kabelbündeln, insbesondere im Automobilbau

## Claims

1. Adhesive tape comprising a nonwoven fibrous support in the form of a needled mat and an adhesive coating covering one side of the support, **characterised in that** it is wound with direct contact between the adhesive and the support of an adjacent turn, that the support has a thickness of between 0.3 and 1 mm and a mass per unit area of fibres of between 70 and 120 g/m² and that the fibres are embedded in the adhesive over a portion of the thickness of the support of between 10 µm and 0.5 mm.

2. Adhesive tape according to claim 1, wherein the thickness of the support is between 0.4 and 0.7 mm.

3. Adhesive tape according to one of the preceding claims, wherein the mass per unit area of fibres of the support is 20 between 80 and 110 g/m².

4. Adhesive tape according to one of the preceding claims having a transverse tearing force of less than 15 N according to the AFERA 4007 method.

5. Adhesive tape according to one of the preceding claims, wherein the fibres of the support are at least substantially formed from polyester and/or viscose fibres.

6. Adhesive tape according to claim 5, wherein the mass ratio of viscose to polyester in said fibres is between 20:80 and 50:50, preferably between 40:60 and 50:50.

7. Adhesive tape according to one of claims 5 and 6, wherein the support contains a proportion of at most 20% by mass of fibres which are more easily fused than the polyester and/or viscose fibres, capable of binding to one another by heat treatment in order to reinforce the cohesion of the support.

8. Adhesive tape according to claim 7, wherein the proportion of said fibres which are more easily fused is between 5 and 15% by mass.

9. Adhesive tape according to one of the preceding claims, wherein the said adhesive is pressure-sensitive.

10. Adhesive tape according to one of the preceding claims, wherein the side of the support opposite the adhesive is calendered.

11. Adhesive tape according to one of the preceding claims, wherein the side of the support opposite the adhesive is coated with a non-stick lacquer.

12. Process for producing an adhesive tape according to one of the preceding claims, wherein the adhesive is applied to the support in the fluid state and is then brought into the solid state by suitable treatment, for example by cooling, drying or irradiation.

13. Use of an adhesive tape according to one of claims 1 to 11 for wrapping bundles of cables, notably in the car industry.
